# DEMANDE DE BREVET EUROPEEN

(11) **EP 0 440 559 A2**
(43) Date de publication de la demande: **07.08.1991**
(21) Numéro de dépôt: 91400232.4
(22) Date de dépôt: 31.01.1991
(51) Int. Cl.: C08L 23/02, C08L 29/04, B32B 27/32

(54) **Composition de polyoléfine et son utilisation**

(30) Priorité: 01.02.1990 JP 23019/90
(71) Demandeur: ELF ATOCHEM S.A., F-92800 Puteaux (FR)
(72) Inventeur: Asano, Kuniyoshi, Hirakata (JP); Uemura, Tomoyoshi, Ibaraki (JP); Takida, Hiroshi, Takatsuki (JP)

(57) **Abrégé**

L'invention concerne une composition à propriété barrière aux gaz comprenant :
(A) 50 à 99,5 % en poids d'une résine de polyoléfine,
(B) 0,4 à 50 % en poids d'un copolymère éthylène-acétate de vinyle saponifié, et
(C) 0,1 à 15 % en poids d'un agent compatibilisant défini dans la description, cette composition satisfaisant à la relation : M₂/M₁ = pas moins de 1,5, dans laquelle M₂ et M₁ sont respectivement les indices de fluidité à chaud de (B) et (A) sous une charge de 2 160 g à 210°C.

Utilisation de la composition pour la préparation de films utilisables notamment dans l'emballage.

## Description

La présente invention fournit une composition de résine de polyoléfine assurant une excellente propriété d'imperméabilité à l'oxygène.

### Art antérieur

Les résines de polyoléfine, comme le polyéthylène et le polypropylène, ont une excellente moulabilité et donnent des articles moulés (ou moulages) excellents quant à leur aspect, leur résistance à l'humidité, leurs propriétés mécaniques, etc., et trouvent, en tant que telles, une application dans de nombreuses utilisations comme films, feuilles, matériaux pour récipients, fibres textiles, etc.

### Problèmes à résoudre

Cependant, les résines de polyoléfine ont plutôt une mauvaise propriété d'imperméabilité aux gaz, en particulier d'imperméabilité à l'oxygène, et il est donc pratiquement impossible de les utiliser telles quelles comme matériaux d'emballage pour les denrées alimentaires facilement sujettes à une oxydation et à une dénaturation oxydante.

Par conséquent, si on pouvait conférer auxdites résines une propriété d'imperméabilité à l'oxygène avec un ou plusieurs autres moyens, elles auraient un intérêt utilitaire encore plus grand.

Une mesure prise pour cela consiste à stratifier une couche d'une autre résine ayant une bonne propriété d'imperméabilité à l'oxygène sur une couche de résine de polyoléfine ou à mélanger cette autre résine avec une résine de polyoléfine. Cependant, les deux procédés ont chacun des avantages et des inconvénients, les propriétés physiques qu'ils permettent d'obtenir n'étant pas toujours satisfaisantes.

Les inventeurs de la présente invention ont aussi tenté d'améliorer la propriété d'imperméabilité à l'oxygène des résines de polyoléfines en les mélangeant avec un copolymère éthylène-acétate de vinyle saponifié qui a une propriété d'imperméabilité à l'oxygène particulièrement bonne. Dans certains cas, toutefois, d'excellentes propriétés physiques des résines de polyoléfine comme l'étirabilité et la flexibilité sont sacrifiées. On n'a encore jamais obtenu jusqu'à maintenant des résultats entièrement satisfaisants.

### Moyens de résoudre les problèmes

Les recherches intensives entreprises par les inventeurs de la présente invention ont révélé que les buts précités sont atteints ou, autrement dit, que l'on peut obtenir la propriété d'imperméabilité à l'oxygène que l'on souhaite, sans altérer en aucune manière l'étirabilité ou la flexibilité intrinsèque des polyoléfines, grâce à une composition de résine de polyoléfine qui comprend
(A) 50 à 99,5% en poids d'une résine de polyoléfine,
(B) 0,4 à 50% en poids d'un copolymère éthylène-acétate de vinyle saponifié, et
(C) 0,1 à 15% en poids d'un polymère greffé obtenu par greffage d'un acide carboxylique à insaturation éthylénique ou d'un de ses dérivés sur une résine de polyoléfine et par réaction du composé d'addition avec un oligomère de polyamide, cette composition satisfaisant à la relation : M₂/M₁ = pas moins de 1,5, dans laquelle M₂ et M₁ sont respectivement les indices de fluidité à chaud de (B) et (A), sous une charge de 2160 g à 210°C. La présente invention est basée sur la découverte ci-dessus.

La présente invention va être décrite plus en détail dans la suite, l'accent étant mis sur la composition ci-dessus et en particulier sur ses utilisations.

En ce qui concerne la résine de polyoléfine (A), on peut citer un polyéthylène linéaire basse densité, les polyéthylènes basse densité et haute densité, les ionomères, un copolymère éthylène-propylène, un polypropylène cristallin, un polybutène, un copolymère éthylène-acétate de vinyle, les copolymères éthylène-ester acrylate, etc. Ceux qui présentent une importance pratique particulière sont un polyéthylène linéaire basse densité, un polyéthylène basse densité ou haute densité et un polypropylène isotactique.

En ce qui concerne le composant (A) ci-dessus, son indice de fluidité à chaud (désigné dans la suite en abrégé par M₁), déterminé à 210°C et sous une charge de 2160 g, selon JIS R-6760, est dans l'intervalle de 0,05à 100 g/10 minutes, et de préférence de 0,5 à 20 g/10 minutes.

Le copolymère éthylène-acétate de vinyle saponifié (B) à employer selon la présente invention est un copolymère ayant une teneur en éthylène de 20 à 60% en moles, de préférence de 25 à 55% en moles, avec un degré de saponification de son composant acétate de vinyle pas inférieur à 95% en moles.

Avec une teneur en éthylène inférieure à 20% en moles, la propriété d'imperméabilité à l'oxygène dans des conditions de forte humidité n'est pas aussi élevée qu'on le souhaiterait, tandis qu'une teneur en éthylène dépassant 60% en moles conduit à des baisses de la propriété d'imperméabilité à l'oxygène, de l'aptitude à l'impression et d'autres propriétés physiques. Lorsque le degré de saponification ou d'hydrolyse est inférieurà 95% en moles, la propriété d'imperméabilité à l'oxygène et la résistance à l'humidité sont sacrifiées.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

En ce qui concerne (B), son indice de fluidité à chaud (IFC, désigné dans la suite par M₂), déterminé à 210°C et sous une charge de 2160 g, selon JIS K-6760, est dans l'intervalle de 0,1 à 150 g/10 minutes et de préférence de 5 à 100 g/10 minutes.

Il est essentiel, dans la préparation de la composition de l'invention, que (A) et (B) soient utilisés dans un rapport M₂/M₁ d'au moins 1,5, de préférence de 2 à 100 et, pour des résultats encore meilleurs, de 3 à 50.

Avec un rapport M₂/M₁ inférieur à 1,5, (B) n'est pas dispersé dans (A), le composant matrice, d'une façon lamellaire, mais dispersé sous forme de particules globulaires ou en forme de tuyère, ce qui fait que l'on n'atteint pas entièrement l'effet recherché.

Pour améliorer la compatibilité entre (A) et (B), l'incorporation de (C) est essentielle à la mise en oeuvre de l'invention.

Le composant (C) est un polymère greffé que l'on obtient en greffant un acide carboxylique à insaturationé thylénique ou un de ses dérivés à une résine de polyoléfine et en faisant réagir cet acide carboxylique ou dérivé avec un oligomère de polyamide.

On peut produire ce polymère greffé en dissolvant ou en mettant en suspension une résine de polyoléfine dans un solvant approprié ou en le mettant à l'état fondu, en activant la chaîne de résine de polyoléfine avec un initiateur de type peroxyde ou diazoïque, en y greffant un acide carboxylique à insaturation éthylénique ou un de ses dérivés pour obtenir un polymère et en mélangeant ce polymère avec un oligomère de polyamide à l'état fondu.

Pour cette réaction, on emploie une machine de Brabender, un malaxeur de Buss, une extrudeuse monovis, une extrudeuse bivis de Werner et Pfleiderer ou analogue.

Le degré de polymérisation de la résine de polyoléfine à employer est d'environ 350 à 45 000, et de préférence d'environ 500 à 10 000. L'indice de fluidité à chaud (230°C; charge 2160 g; même chose dans la suite) est d'environ 0,1 à 50 g/10 minutes pour toutes les utilisations pratiques.

Le rapport réactionnel de la résine de polyoléfineà l'acide carboxylique à insaturation éthylénique ou son dérivé est de 100/0,05 à 100/10, et de préférence de 100/0,5 à 100/3, exprimé sur une base pondérale.

Si le rapport est de 100/moins de 0,05, l'effet améliorant sur la compatibilité n'est pas suffisant. D'autre part, si le rapport est de 100/plus de 10, la viscosité est trop élevée pour un moulage pratique.

Le degré de polymérisation dudit oligomère de polyamide est de 5 à 80, de préférence d'environ 15 à 55, pour toutes les utilisations pratiques, et le rapport réactionnel est de 0,01 à 1 mole, et de préférence de 0,05 à 0,9 mole, par mole du groupe carboxyle.

Comme exemples de la résine de polyoléfine, on peut citer un polyéthylène linéaire basse densité, un polyéthylène basse densité ou haute densité, des ionomères, un copolymère éthylène-propylène, un polypropylène cristallin, un polybutène, un copolymère éthylène-acétate de vinyle, un copolymère éthylène-ester acrylique, etc. Ceux qui sont importants pour les applications pratiques sont un polyéthylène linéaire basse densité, un polyéthylène basse densité, un polyéthylène moyenne densité, un polyéthylène haute densité, un copolymère éthylènepropylène, un copolymère éthylène-acétate de vinyle et un polypropylène cristallin.

L'acide carboxylique à insaturation éthylénique ou son dérivé à greffer à ce polymère principal englobe, entre autres, les acides carboxyliques insaturés comme l'acide acrylique, l'acide méthacrylique, l'acide crotonique, l'acide maléique, l'acide fumarique et l'acide itaconique, et les anhydrides ou semi-esters correspondants.

L'oligomère de polyamide peut être préparé par des procédés connus comme la polymérisation d'addition d'un lactame, la polycondensation d'un acide aminocarboxylique, la polycondensation d'une diamine avec un acide dicarboxylique, etc.

Des exemples des produits de départ pour ledit oligomère de polyamide sont divers lactames comme l'ε-caprolactame, l'énantholactame, le caprylolactame, le laurolactame, l'α-pyrrolidone, l'α-pipéridone, etc., les ω-aminoacides comme l'acide 6-aminocaproïque, l'acide 7-aminoheptanoïque, l'acide 9-aminononanoïque, l'acide 11-aminoundécanoïque, etc., les diacides comme l'acide adipique, l'acide glutarique, l'acide pimellique, l'acide subérique, l'acide azélaïque, l'acide sébacique, l'acide undécadioïque, l'acide dodécadioïque, l'acide hexadécadioïque, l'acide hexadécènedioïque, l'acide éicosadioïque, l'acide éicosadiènedioïque, l'acide diglycolique, l'acide 2,2,4-triméthyladipique, l'acide xylylènedicarboxylique, l'acide 1,4-cyclohexanedicarboxylique, l'acide téréphtalique, l'acide isophtalique, etc., et les diamines comme l'hexaméthylènediamine, la tétraméthylènediamine, la nonaméthylènediamine, l'undécaméthylènediamine, la dodécaméthylènediamine, la 2,2,4- (ou 2,4,4-)triméthylhexaméthylènediamine, le bis(4,4′-aminocyclohexyl)méthane, la métaxylylènediamine, etc. Pour la régulation de la masse moléculaire, on peut aussi utiliser une monoamine comme la laurylamine ou l'oléylamine en une quantité appropriée.

Dans la composition de la présente invention, la proportion de (A) doit être de 50 à 99,5% en poids et de préférence de 60 à 95% en poids, celle de (B) doit être de 0,4 à 50% en poids et de préférence de 4,5 à 35% en poids, et celle de (C) doit être de 0,1 à 15% en poids et de préférence de 0,5 à 10% en poids.

Lorsque la proportion de (A) est inférieure à 50% en poids ou que celle de (B) est supérieure à 50% en poids, cela a une incidence défavorable sur la moulabilité, en particulier sur l'étirabilité. Inversement, lorsque la proportion de (A) est supérieure à 99,5% en poids ou que celle de (B) est inférieure à 0,4% en poids, l'effet d'amélioration de la propriété d'imperméabilité à l'oxygène est insuffisant.

Lorsque la proportion de (C) est inférieure à 0,1% en poids, la compatibilité entre (A) et (B) est faible et l'effet d'amélioration de la propriété d'imperméabilité à l'oxygène est également mauvais. Inversaient, lorsque la proportion de (C) dépasse 15% en poids, cela a une incidence défavorable sur la moulabilité en grande série.

Alors que la composition selon la présente invention est utile pour une variété d'applications comme des articles façonnés, des adhésifs, des revêtements, etc., elle est particulièrement utile dans des applications de moulage et peut être moulée en pastilles, films, feuilles, récipients, fibres, barreaux, tuyaux et autres articles façonnés, par la technique du pétrissage en fusion. Ces produits peuvent être broyés (pour être régénérés) ou mis en pastilles pour un nouveau moulage en fusion.

Pour le moulage en fusion de la composition, le moulage par extrusion (par exemple l'extrusion en filière en T, le moulage par gonflement, le moulage par soufflage, le filage en fusion ou l'extrusion-profilage) et le moulage par injection sont principalement employés. La température de moulage en fusion est choisie dans de nombreux cas dans l'intervalle de 160 à 290°C. En plus des techniques ci-dessus, on peut aussi employer des techniques de moulage à deux couleurs et de moulage par injection-soufflage et on peut fabriquer des articles façonnés ayant de bonnes tolérances dimensionnelles.

Dans le procédé de moulage, il est bien sûr possible d'utiliser deux ou plus de deux copolymères éthylène-acétate de vinyle saponifiés de teneurs en éthylène et/ou de degré de saponification différents, en combinaison. Dans le moulage en fusion, il est aussi possible d'incorporer des quantités convenables d'additifs comme un plastifiant (par exemple un polyalcool), un stabilisant, un tensioactif, un agent de réticulation (par exemple un composé époxydé, un sel de métal polyvalent, un polyacide minéral ou organique ou un de ses sels), une charge, un colorant, une fibre de renforcement (par exemple une fibre de verre, une fibre de carbone, etc.), etc. Il est aussi possible d'incorporer une autre résine thermoplastique dans une proportion convenable. Une telle résine thermoplastique englobe, entre autres, diverses polyoléfines autres que (A), des polyoléfines modifiées que l'on obtient par modification par greffage de ces polyoléfines avec des acides carboxyliques insaturés ou des dérivés de ceux-ci, des polyamides, du poly(chlorure de vinyle), du poly(chlorure de vinylidène), des polyesters, du polystyrène, du polyacrylonitrile, des polyuréthanes, des polyacétals, des polycarbonates, une résine de poly(alcool vinylique) moulable à chaud, etc.

Comme on l'a indiqué ci-dessus, la composition de la présente invention n'est pas seulement utilisée pour la fabrication d'un article à une seule couche essentiellement composé de la composition, mais est aussi souvent utilisée comme article stratifié contenant au moins une couche de la composition. La couche de la composition de la présente invention présente une affinité de liaison élevée caractéristique pour le matériau de la couche à stratifier avec elle.

Dans la fabrication d'un produit stratifié selon l'invention, dans lequel un matériau différent est stratifié sur un côté ou sur les deux côtés d'une couche de la composition de l'invention, on peut, par exemple, employer les procédés de stratification suivants. On peut ainsi mentionner le procédé qui comprend l'extrusion en fusion d'une résine thermoplastique sur un film ou une feuille de la composition de l'invention, le procédé qui comprend l'extrusion en fusion de la composition de l'invention sur un substrat fait d'une résine thermoplastique ou d'un autre matériau quelconque, le procédé qui comprend la co-extrusion de la composition de l'invention et d'une résine thermoplastique différente, et le procédé dans lequel un film ou une feuille de la composition de l'invention est stratifié sur un film ou une feuille d'un matériau différent avec un adhésif connu tel qu'un composé d'organotitane, un composé isocyanate ou un composé polyester.

Comme résines de combinaison pour la co-extrusion, on peut mentionner un polyéthylène linéaire basse densité, un polyéthylène basse densité, un polyéthylène moyenne densité, un polyéthylène haute densité, un copolymère éthylène-acétate de vinyle, des ionomères, des copolymères éthylène-propylène, des copolymères éthylène-ester acrylique, un polypropylène, des copolymères propylène-α-oléfine (α-oléfine en C₄-C₂₀), des homo- et copolymères d'oléfines comme le polybutène, le polypentène, etc., et des résines de polyoléfine au sens large que l'on obtient en modifiant ces homopolymères ou copolymères d'oléfines par greffage d'un acide carboxylique insaturé ou d'un ester de celui-ci, des polyesters, des polyamides, des polyamides copolymérisés, un poly(chlorure de vinyle), un poly(chlorure de vinylidène), des résines acryliques, des résines styréniques, une résine d'ester vinylique, des élastomères de polyester, des élastomères de polyuréthanne, un polyéthylène chloré, un polypropylène chloré, etc. Un copolymère éthylène-acétate de vinyle saponifié peut aussi être co-extrudé.

Lorsqu'on prépare un film ou une feuille ou un article façonné analogue à partir de la composition de l'invention, puis qu'on le revêt par extrusion d'un matériau différent ou qu'on le stratifie sur un film ou une feuille d'un matériau différent avec un adhésif, ledit matériau différent n'est pas limité auxdites résines thermoplastiques, mais peut être pratiquement n'importe quel autre matériau (comme le papier, une feuille métallique, un film ou une feuille de matière plastique orienté uniaxialement ou biaxialement, un tissu tissé, un tissu non tissé, un filament métallique, du bois, etc.).

La structure stratifiée dudit produit stratifié est une question de choix. Ainsi, une couche de la composition de l'invention étant appelée A (A1, A₂,...) et une couche d'un matériau différent, par exemple une résine thermoplastique, étant appelée B (B₁, B₂,...), on peut employer pour un film, une feuille ou une bouteille, par exemple, non seulement une structure à deux couches de A/B, mais aussi une variété d'autres combinaisons comme B/A/B, A/B/A/, A₁/A₂/B, A/B₁/B₂, B/A/B, B₂/B₁/A/B₁/B₂, etc. Dans le cas d'un filament, on peut adopter un type bimétal, âme (A) - gaine (B), âme (B) - gaine (A), âmegaine excentrées et d'autres combinaisons de A et de B.

Pour la co-extrusion, on peut mélanger A à B ou vice versa ou bien, pour améliorer l'adhérence entre les couches, on peut incorporer une résine convenable au moins dans l'un de A et B.

Le produit stratifié peut être éventuellement configuré. Ainsi, on peut citer un film, une feuille, un ruban, une bouteille, un tuyau, un filament ou un extrudat à section droite modifiée.

Le produit stratifié peut, éventuellement, être soumis ensuite à une variété de traitements, comme un traitement thermique, un refroidissement, un laminage, une impression, une stratification à sec, un revêtement en solution ou en fusion, la production de sacs, l'emboutissage profond, la fabrication de boîtes, la fabrication de tubes, un dédoublement, etc.

Les articles façonnés et les produits stratifiés précités, en particulier sous forme de films ou de feuilles, peuvent avoir des propriétés physiques améliorées par étirage ou traction, le cas échéant.

Dans la présente invention, la composition est moulée en fusion en un matériau en film. L'épaisseur de ce film est pratiquement une question de choix et peut s'échelonner de quelques microns à plusieurs centaines de microns. Le terme "film" utilisé dans cette description signifie un film au sens large du terme, incluant ainsi une feuille, un ruban, un tube, un récipient, etc.

Le film obtenu de la manière ci-dessus est conditionné pour l'absorption de l'humidité ou le séchage,é ventuellement, puis étiré.

Cet étirage peut être uniaxial ou biaxial. Les effets de l'invention sont mieux matérialisés lorsque le taux d'étirage ou traction est aussi élevé que possible. Dans le cas d'un étirage uniaxial, le taux d'étirage est de préférence d'au moins 1,5 fois et, pour de meilleurs résultats encore, non inférieur à 2 fois. Dans le cas d'un étirage biaxial, le taux d'étirage n'est de préférence pas inférieur à 1,5 fois, mieux encore pas inférieur à 2 fois et, pour des résultats encore meilleurs, pas inférieur à 4 fois, sur une base surfacique.

Quant à la technique d'étirage que l'on peut employer, on peut citer les procédés d'étirage au cylindre, d'étirage à la rame, d'étirage tubulaire et d'étirage-soufflage, ainsi que l'emboutissage profond à forte traction ou le moulage sous vide. Dans le cas d'uné tirage biaxial, on peut adopter ou bien l'étirage biaxial simultané, ou bien l'étirage biaxial en deux temps.

La température d'étirage est choisie dans l'intervalle d'environ 40 à 150°C.

A la fin de l'étirage, le produit est durci thermiquement. Ce durcissement thermique peut être réalisé par la technique bien connue. Ainsi, le film étiré étant maintenu dans un état raidi, il est traité thermiquement à une température de 50 à 160°C, de préférence de 80 à 160°C, pendant environ 2 à 600 secondes.

Le film orienté résultant peut être soumis à une variété de traitements tels que refroidissement, laminage, impression, stratification à sec, revêtement en solution ou en fusion, fabrication de sacs, emboutissage profond, fabrication de boîtes, fabrication de tubes, dédoublement, etc.

Le film, la feuille ou le récipient que l'on obtient à partir de la composition de la présente invention est utile pour emballer les denrées alimentaires, les produits pharmaceutiques, les produits chimiques industriels, les produits agrochimiques, etc.

### Effets

La composition selon l'invention, qui comprend (A), (B) et (C), peut avoir une propriété d'imperméabilité à l'oxygène nettement améliorée, tout en conservant les excellentes caractéristiques de moulage et les excellentes propriétés physiques (étirabilité, flexibilité, etc.) qui sont inhérentes aux polyoléfines.

### Exemples

Les exemples suivants constituent une autre illustration de la composition de la présente invention. Dans la description qui suit, toutes les parties et tous les % sont en poids, sauf indication contraire.
Préparation des échantillons

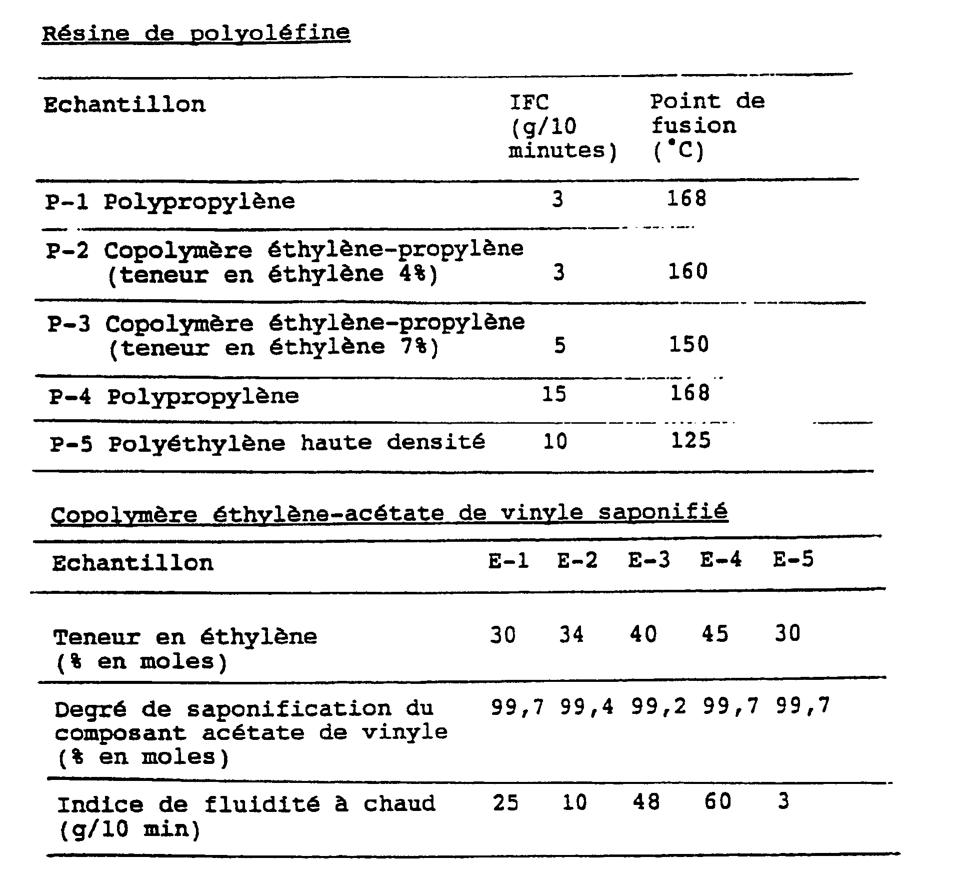

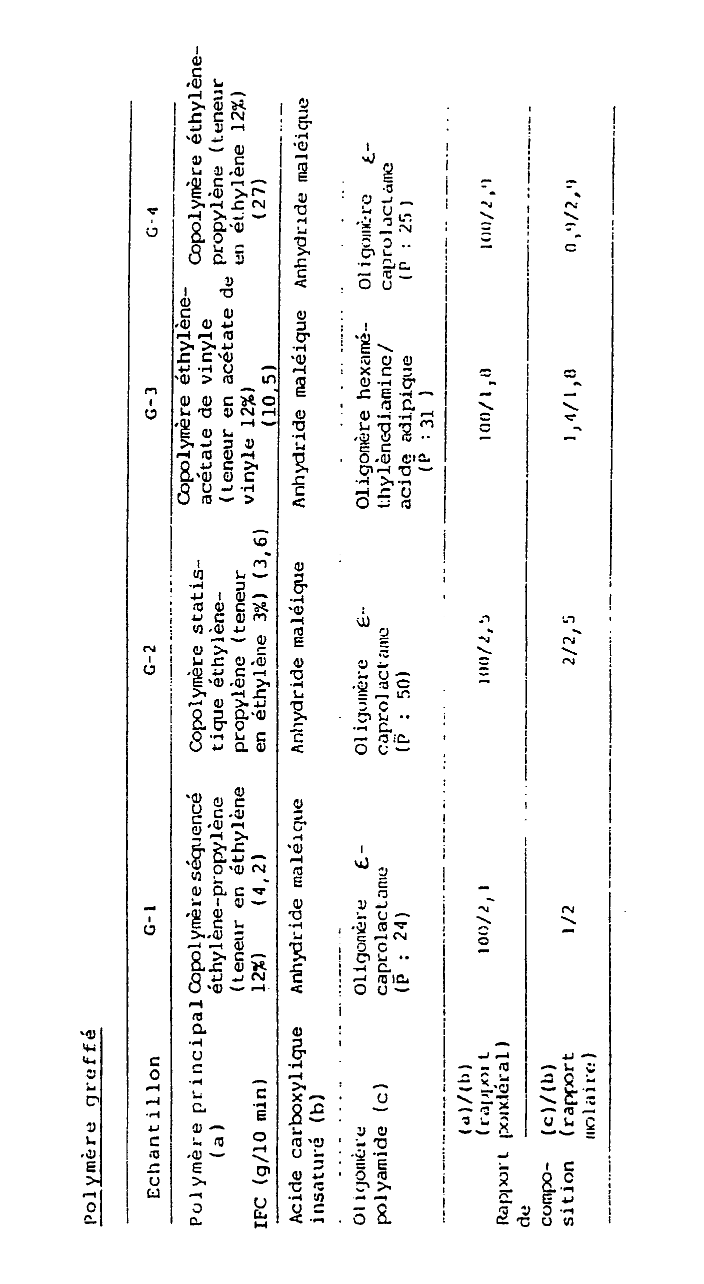

### Exemples 1 à 10 et exemples de référence 1 à 7

On mélange dans un malaxeur Henschel des pastilles de la composition de (A), (B) et (C) et on les introduit dans une machine d'extrusion à filière en T pour le pétrissage en fusion et l'extrusion de la filière en T, pour produire un film de 30 µ d'épaisseur. (Dans l'évaluation de l'étirabilité, on utilise un film de 180µ
d'épaisseur.)

Les conditions de moulage par extrusion sont les suivantes.
Extrudeuse : extrudeuse de diamètre 40 mm
Vis : type vis sans fin, L/D = 28, taux de compression = 3
Température d'extrusion (°C) :

C₁/C₂/C₃/C₄/H/D₁/D₂ = 170/200/220/220/220/210/210
Vitesse de rotation de la vis : 30 tours/min ou 85 tours/min

Les résultats obtenus sur le film sont indiqués sur le tableau 1.

Dans ce tableau, ainsi que dans le tableau 2, les signes ⓞ ,0,Δ et X signifient respectivement très bon, bon, moyen et mauvais.

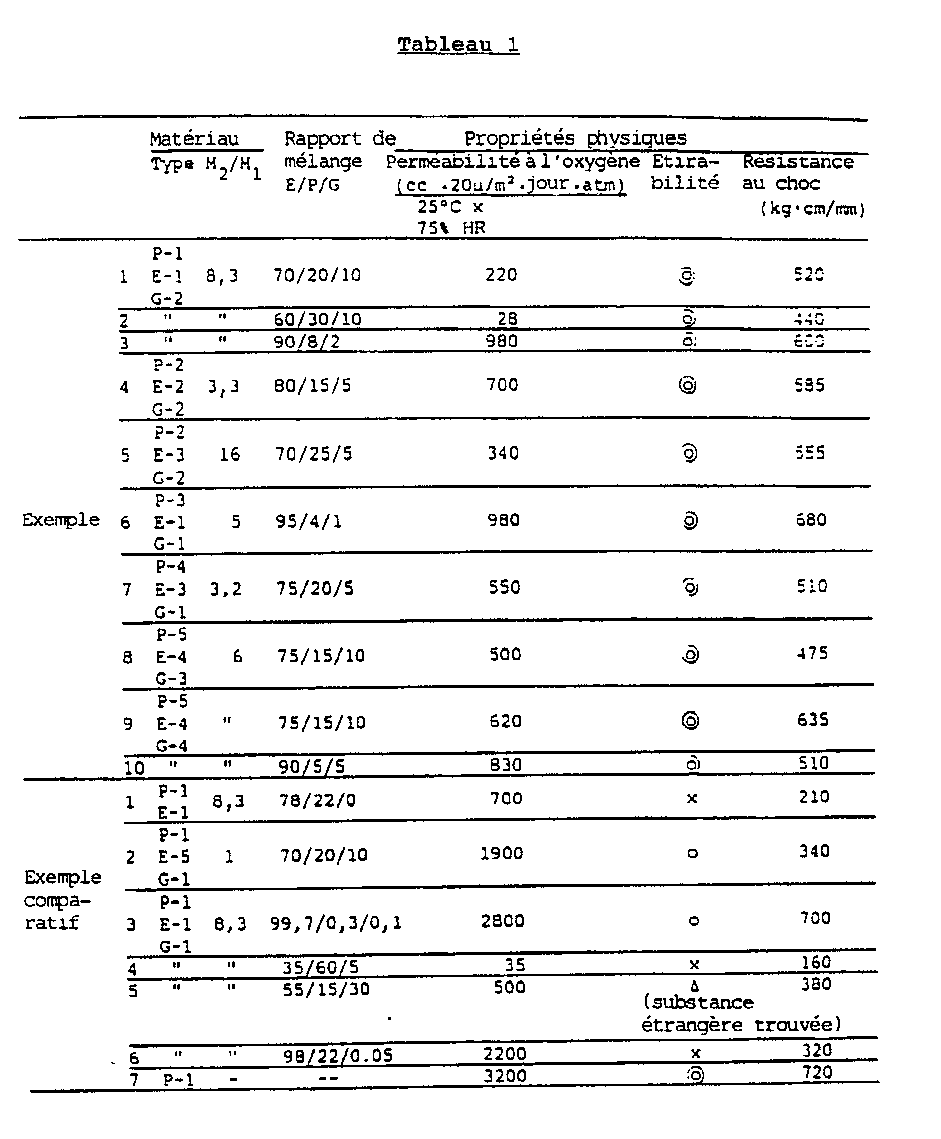

### (Détermination des propriétés physiques)

- Perm: éabilité à l'oxygène : déterminée avec un
- MOCON Oxtran 10/50.
- Etir: abilité : évaluée en termes d'étirage non uni-
- forme dans un étirage biaxial simultané (5 x 5
- fois) à 90°C.
- Rési: stance au choc : déterminée dans un appareil
- de mesure des chocs pour films, diamètre de la
- tête d'impact 1 pouce, 20°C x 65% HR.

### Exemples 11 à 15

- Couc: he intérieure (I) : Polyéthylène basse densité
- (IFC : 16 g/10 min, 190°C/2160 g)
- Couc: hes adhésives (II) et (IV) : Copolymère éthylène
- modifié par l'anhydride maléique-acétate de vinyle
- (IFC : 2 g/10 min, 190°C/2160 g)
- Couc: he intermédiaire (III) : Composition comprenant
- (A), (B) et (C) selon l'invention
- Couc: he extérieure (V) : Polyéthylène basse densité
- (IFC : 16 g/10 min, 190°C/2160 g).

En utilisant les matériaux résiniques ci-dessus, on fabrique, dans les conditions suivantes, un stratifié à cinq couches ayant pour construction et épaisseurs de films (µ) (I)/(II)/(III)/(IV)/(V) = 20/5/60/5/20.

### Conditions de moulage

### Extrudeuses

Extrudeuse de diamètre 60 mm (pour la couche intérieure)

Extrudeuse de diamètre 40 mm (pour la couche intermédiaire)

Extrudeuse de diamètre 40 mm (pour les couches adhésives)

Extrudeuse de diamètre 60 mm (pour la couche extérieure)
Vis : toutes de type vis sans fin, L/D = 30; taux de compression 2,8
Vitesse de rotation de la vis :

50 tours/min pour la couche intérieure

40 tours/min pour la couche intermédiaire

40 tours/min pour les couches adhésives

50 tours/min pour la couche extérieure

### Filière :

Filière en T avec adaptateur de combinaison de 5 couches

Largeur de la filière : 300 mm

### Température d'extrusion :

Extrudeuses pour couches intérieure, extérieure et adhésives
C₁ = 170°C C₂ = 220°C
C₃ = 210°C C₄ = 210°C

Extrudeuse pour couche intermédiaire
C₁ = 170°C C₂ = 200°C
C₃ = 210°C C₄ = 210°C

Adaptateur de combinaison 210°C

Filière en T 210°C

Les résultats sont présentés sur le tableau 2.

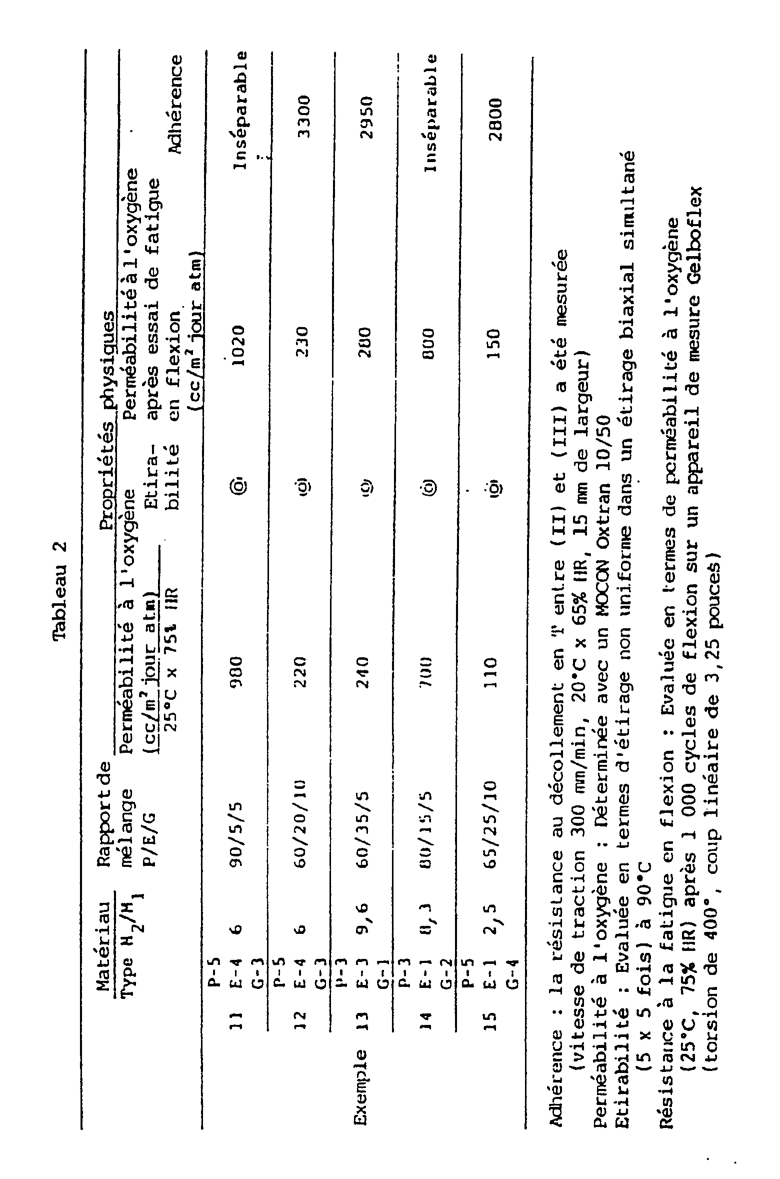

## Revendications

1. Composition de polyoléfine comprenant
(A) 50 à 99,5% en poids d'une résine de polyoléfine,
(B) 0,4 à 50% en poids d'un copolymère éthylène-acétate de vinyle saponifié, et
(C) 0,1 à 15% en poids d'un polymère greffé obtenu par greffage d'un acide carboxylique à insaturationé thylénique ou d'un de ses dérivés sur une résine de polyoléfine et par réaction du composé d'addition avec un oligomère de polyamide, cette composition satisfaisant à la relation : M₂/M₁ = pas moins de 1,5, dans laquelle M₂ et M₁ sont respectivement les indices de fluidité à chaud de (B) et (A), sous une charge de 2160 g à 210°C.

2. Article façonné obtenu par moulage en fusion de la composition selon la revendication 1.

3. Structure stratifiée dont moins une couche est constituée d'une composition selon la revendication 1.

4. Article façonné selon la revendication 2 ou structure stratifiée selon la revendication 3, qui est au moins orienté uniaxialement.
